# FASCICULE DE BREVET EUROPEEN

(11) **EP 1 006 013 B1**
(45) Date de publication et mention de la délivrance du brevet: **06.10.2004**
(21) Numéro de dépôt: 99402934.6
(22) Date de dépôt: 25.11.1999
(51) Int. Cl.: B60J 7/047

(54) **Dispositif formant toit coulissant de véhicule automobile**
Schiebedachvorrichtung für Kraftfahrzeug
Sliding roof device for motor vehicle

(30) Priorité: 01.12.1998 FR 9815136
(43) Date de publication de la demande: 07.06.2000
(73) Titulaire: AUTOMOBILES PEUGEOT, 75016 Paris (FR); AUTOMOBILES CITROEN, 92200 Neuilly-sur-Seine (FR)
(72) Inventeur: Bertrand Belanger, Pascal, 75009 Paris (FR)
(74) Mandataire: Thinat, Michel

(56) Documents cités:
- FR-A- 1 168 737
- FR-A- 2 744 957

## Description

La présente invention concerne un dispositif formant toit coulissant de véhicule automobile. Un dispositif selon le préambule de la revendication 1 est connu du document FR-A-2 744 957.

On connaît des véhicules décapotables dont la capote s'ouvre en se repliant sur elle-même.

Cependant, cette solution connue de toit ouvrant a pour inconvénient qu'elle peut être détruite par des personnes malveillantes. En outre, elle ne permet pas de transformer le véhicule d'un type particulier en un autre de type différent, par exemple une berline en un cabriolet.

La présente invention propose une solution permettant d'éliminer les inconvénients ci-dessus des toits ouvrants connus.

A cet effet, le dispositif formant toit coulissant de véhicule automobile de l'invention est caractérisé en ce que le toit coulissant est guidé bilatéralement au cours de son déplacement dans deux rails et en ce qu'il comprend des moyens logés dans les deux rails de guidage et agissant sur les bords latéraux du toit pour les maintenir fixement dans les rails à une position choisie du toit ouvrant.

Le dispositif comprend en outre des moyens assurant l'étanchéité des bords latéraux du toit lorsque ceux-ci sont fixés par les moyens de maintien dans les deux rails de guidage.

De préférence, les moyens de maintien et d'étanchéité sont intégrés dans les deux rails de guidage.

Les moyens de maintien comprennent des éléments mâles et femelles des rails de guidage et des bords latéraux du toit, pouvant pénétrer les uns dans les autres pour verrouiller le toit aux rails de guidage et des moyens commandés d'application des bords latéraux du toit sur les rails de guidage de façon que les éléments mâles pénètrent dans les éléments femelles.

Les moyens d'application sont également agencés pour appliquer les bords latéraux du toit sur les moyens d'étanchéité.

Chaque rail de guidage est constitué par un profilé à section transversale en forme de U.

De préférence, les moyens d'application comprennent, pour chaque rail de guidage, un joint gonflable en forme de tube logé dans une rainure réalisée dans l'une des ailettes du U du rail de guidage à l'opposé du moyen d'étanchéité associé qui est fixé à l'ailette opposée du U du rail, le joint gonflable pouvant occuper un état inactif dégonflé dans lequel il est logé pratiquement complètement dans la rainure ou un état actif gonflé en faisant saillie de la rainure pour appliquer le bord correspondant du toit ouvrant sur le moyen d'étanchéité.

Chaque moyen d'étanchéité est un joint d'étanchéité s'étendant le long de l'ailette du U du rail de guidage à laquelle il est fixé.

Le dispositif comprend également des moyens permettant de faciliter le coulissement des bords latéraux du toit ouvrant dans les rails de guidage et ces moyens comprennent, pour chaque rail de guidage, deux pistes en matériau à faible coefficient de friction, tel que du Téflon®, fixées à l'ailette du U du rail supportant le joint gonflable en étant disposées de part et d'autre de la rainure de celui-ci.

Le toit coulissant comprend des lamelles rigides transversales articulées les unes aux autres et dont les extrémités logées dans les rails de guidage constituent les bords latéraux précités du toit coulissant.

Selon un mode de réalisation, les éléments mâles de chaque rail de guidage sont constitués par des plots fixés à l'ailette du U de ce rail opposée à celle supportant le joint gonflable et les éléments femelles des bords latéraux du toit sont constitués par des cavités réalisées dans les extrémités correspondantes des lamelles articulées, à l'opposé du joint gonflable.

Chaque articulation de deux lamelles rigides adjacentes est formée par une charnière transversale à film double permettant aux lamelles de se replier les unes sur les autres lors du coulissement du toit.

La hauteur de repliement les unes sur les autres des lamelles rigides est au plus égale à l'espace disponible en hauteur entre les ailettes de chaque rail de guidage.

L'invention propose également un véhicule automobile équipé du dispositif formant toit coulissant tel que défini précédemment.

Selon une caractéristique de ce véhicule, les rails de guidage précitées comprennent, solidaires de la caisse du véhicule et de chaque côté de celui-ci, un rail supérieur s'étendant de l'avant du véhicule à partir du pare-brise à l'arrière du véhicule en épousant sensiblement la forme de celui-ci et se terminant approximativement au niveau du fond du coffre arrière et deux rails de dérivation respectivement intermédiaire et arrière raccordés au rail supérieur, le rail intermédiaire s'étendant suivant le montant intermédiaire du véhicule situé entre les deux portes avant et arrière et le rail arrière s'étendant à proximité du bord arrière de l'ouverture de la porte arrière en ayant sensiblement la même forme que celui-ci.

Le toit coulissant du véhicule comprend deux parties coulissantes séparées à lamelles articulées respectivement avant et arrière et un cadre de support de la lunette arrière du véhicule est monté coulissant par ses côtés latéraux dans les rails de guidage et peut être fixé dans ceux-ci par les moyens d'application précités, les deux parties coulissantes et le cadre de la lunette arrière pouvant être amenés à des positions fixes relatives correspondant à plusieurs configurations différentes définissant un type particulier de véhicule, tel qu'une berline où la partie de toit avant, le cadre de lunette arrière et la partie de toit arrière sont en prolongement dans cet ordre le long des rails supérieurs avec les lamelles de ces deux parties occupant une position déployée de fermeture totale du pavillon du véhicule ; un cabriolet où la partie de toit avant, le cadre de lunette arrière et la partie de toit arrière sont en prolongement dans cet ordre le long des rails supérieurs avec les lamelles de ces deux parties en position repliée les unes sur les autres de façon à découvrir la partie du pavillon du véhicule située au-dessus des sièges avant et arrière et entrouvrir au moins en partie le hayon arrière du véhicule ; un genre de pick-up à quatre places où la partie de toit avant est située dans les rails supérieurs en ayant certaines de ses lamelles repliées les unes sur les autres pour fermer au moins la partie du pavillon située au-dessus des sièges arrière et le cadre de lunette arrière et la partie de toit arrière sont situés dans les deux rails arrière l'un au-dessus de l'autre ; ou un genre de pick-up à deux places où la partie de toit avant est située dans les rails supérieurs en ayant ses lamelles repliées les unes sur les autres pour fermer la partie du pavillon située au-dessus des sièges avant et le cadre de lunette arrière et la partie de toit arrière sont situés dans les rails intermédiaires l'un au-dessus de l'autre.

Dans la configuration du véhicule en berline ou en cabriolet, les lamelles de la partie de toit arrière peuvent coulisser dans les rails supérieurs pour passer en dessous du cadre de lunette arrière afin de permettre l'ouverture du hayon arrière.

L'invention sera mieux comprise et d'autres buts, détails, avantages et caractéristiques de celle-ci apparaîtront plus clairement au cours de la description explicative qui va suivre faite en référence aux dessins schématiques annexés, donnés uniquement à titre d'exemple illustrant un mode de réalisation et dans lesquels :

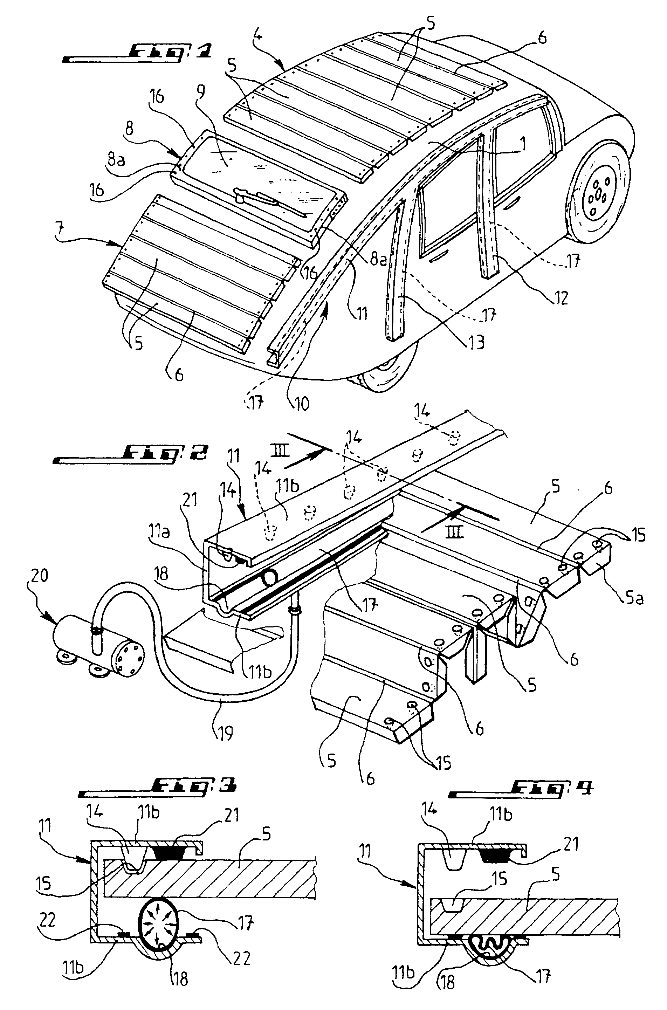

- la figure 1 est une vue en perspective d'un véhicule automobile dont le pavillon comporte le dispositif formant toit coulissant ou ouvrant de l'invention ;
- la figure 2 est une vue partielle en perspective et éclatée d'un rail de guidage et de lamelles rigides transversales du toit coulissant ;
- la figure 3 est une vue partielle en coupe suivant la ligne III-III de la figure 2 représentant une lamelle du toit coulissant en position verrouillée dans le rail de guidage ;
- la figure 4 est une vue en coupe semblable à celle de la figure 3 représentant la lamelle en position déverrouillée ; et
- les figures 5 à 8 représentent le dispositif de toit ouvrant de l'invention permettant de configurer le véhicule suivant plusieurs types différents.

En se reportant aux figures, la référence 1 désigne le pavillon d'un véhicule automobile à travers lequel est réalisée une ouverture de forme sensiblement rectangulaire 2 pouvant être fermée par le dispositif formant toit ouvrant ou coulissant de l'invention.

Le pavillon 1 est prolongé par la partie arrière du véhicule qui comporte également une ouverture sensiblement de forme rectangulaire 3 en prolongement de l'ouverture 2 et pouvant être également fermée par le dispositif de toit coulissant de l'invention.

Ce dispositif comprend une partie de toit ouvrant avant 4 constituée d'un certain nombre de lamelles rigides transversales 5 réalisées, par exemple, en une matière plastique à base de PVC et reliées les unes aux autres par des articulations transversales 6, mieux visibles en figure 2, permettant aux lamelles, lors du déplacement du toit ouvrant, de se replier les unes sur les autres en formant des parties juxtaposées en forme de U à ouvertures dirigées vers le bas comme représenté en figure 2 pour permettre l'obtention de différentes configurations du véhicule qui seront détaillées ultérieurement. Plus précisément, la figure 2 montre que le repliement des lamelles 5 s'effectue par la mise en place face contre face de deux lamelles adjacentes 5 en position debout et l'amenée des deux lamelles 5 situées de part et d'autre des deux lamelles centrales en contact l'une avec l'autre à une position sensiblement perpendiculaire à ces deux dernières et ainsi de suite. Les extrémités de chaque lamelle 5 comportent chacune un bord 5a s'étendant perpendiculairement à celle-ci et présentant la forme d'un trapèze isocèle permettant d'obtenir les formes en U successives en position repliée des lamelles.

Le dispositif de toit coulissant comprend également une partie de toit arrière 7 constituée d'un certain nombre de lamelles rigides transversales 5 identiques aux lamelles 5 de la partie de toit avant 4 et articulées les unes par rapport aux autres de la même manière que celles-ci pour permettre le repliement d'une partie de ces lamelles de la manière représentée en figure 2.

De préférence, les articulations des lamelles 5 des deux parties de toit avant et arrière sont intégralement moulées avec les lamelles et sont réalisées chacune par une charnière transversale à film double permettant une rotation relative des lamelles 5 de 360°.

Un cadre 8 de support d'une lunette arrière 9 est normalement disposé entre les deux parties de toit avant 4 et arrière 7 à une position relative dépendant de la configuration souhaitée du véhicule. Ce cadre comporte l'équipement habituel constitué du balai d'essuie-glace, de son moteur, de la pompe lave-glace et du réservoir, et le cas échéant, du dégivrage arrière. Il comporte en outre un ensemble contacteur électrique permettant d'alimenter électriquement le moteur d'essuie-glace, la pompe de lave glace et le dégivrage arrière.

Les deux parties 4 et 7 et le cadre de lunette arrière 8 sont guidés bilatéralement au cours de leur mouvement à une position souhaitée par deux réseaux latéraux 10 de rails de guidage, qui comprennent chacun un rail de guidage supérieur 11 fixé à la carrosserie du véhicule en s'étendant de l'avant du véhicule à partir du pare-brise vers l'arrière de celui-ci en épousant la forme externe du véhicule et se terminant approximativement au fond du coffre arrière, et deux rails de dérivation respectivement intermédiaire 12 et arrière 13 également fixés à la carrosserie du véhicule et raccordés aux rails supérieurs 11. Le rail intermédiaire 12 s'étend suivant le montant intermédiaire du véhicule situé entre les deux portes avant et arrière en étant disposé, bien entendu, le long de la paroi interne de ce montant. Le rail arrière 13 s'étend du haut en bas du véhicule à proximité du bord arrière de l'ouverture de la porte arrière en ayant sensiblement la même forme que celui-ci et est fixé à l'intérieur du véhicule.

Les deux parties de toit avant 4 et arrière 7 et le cadre de lunette arrière 8 peuvent coulisser dans les rails latéraux de guidage 11-13 des deux réseaux 10 pour occuper des positions relatives déterminées correspondant chacune à une configuration souhaitée du véhicule. A cet effet, les extrémités des lamelles 5 des parties de toit 4, 7 et les côtés latéraux 8a du cadre de lunette arrière 8 sont engagés respectivement dans les rails latéraux de guidage correspondants 11-13 et peuvent être maintenus fixement dans ceux-ci à une position choisie.

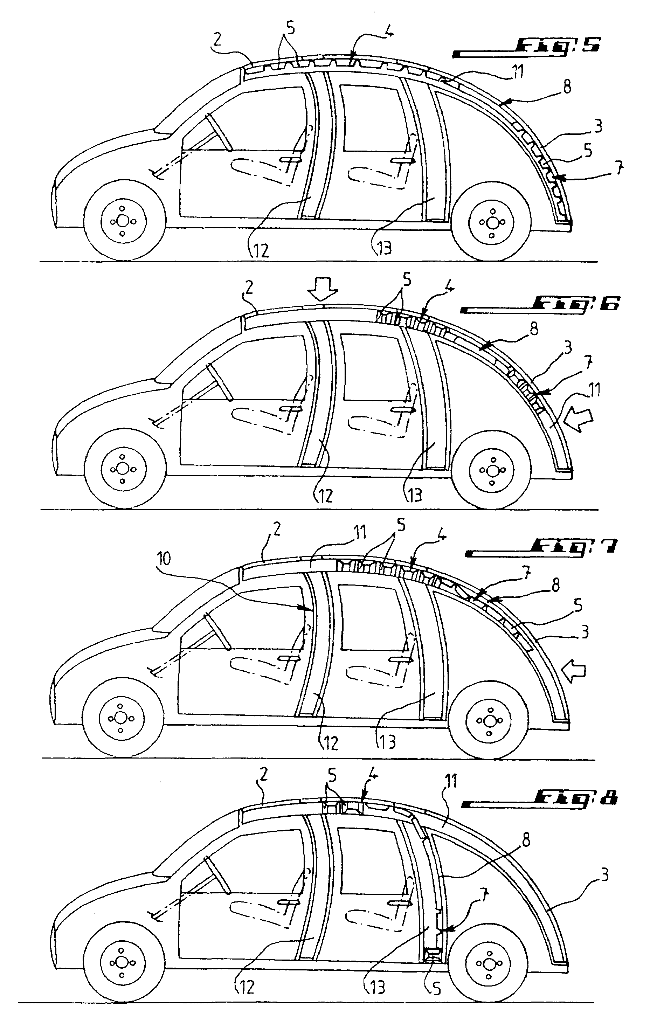

Les moyens de maintien sont représentés aux figures 2 à 4 en liaison avec les deux rails de guidage supérieurs 11 dont un seul, celui de gauche, est représenté et est constitué d'un profilé à section transversale en forme de U allongé de façon que la branche 11a de liaison des ailettes parallèles 11b soit située dans un plan vertical. Les moyens de maintien comprennent des éléments mâles 14 constitués par des plots fixés en série à la paroi interne de l'une des ailettes 11b du rail 11, dans le cas présent l'ailette supérieure, et des éléments femelles 15 constitués par des cavités réalisées aux extrémités correspondantes des lamelles 5 de façon que les éléments mâles 14 puissent pénétrer dans les éléments femelles 15 pour verrouiller les lamelles 5 aux rails 11. La figure 2 montre que chaque lamelle 5 comporte deux cavités 15 à chacune de ses extrémités. De même, chaque côté latéral 8a du cadre de lunette arrière 8 comporte une série de cavités 16 dans lequelles peuvent pénétrer les plots 14 du rail correspondant pour verrouiller le cadre 8 à une position fixe choisie dans les rails latéraux. Les moyens de maintien comprennent également dans chaque rail de guidage 11-13, un moyen 17 d'application par pression des extrémités des lamelles 5 et du côté latéral 8a du cadre 8 sur l'ailette 11b où se trouvent les plots de verrouilage 14 de façon à engager ces derniers dans les cavités en vis-à-vis 15 et 16. De préférence, ces moyens d'application comprennent chacun un joint gonflable en forme de tube 17 logé dans une rainure 18 réalisée dans l'ailette 11b du U du rail 11 opposée à l'ailette comportant les plots de verrouillage 14. La rainure 18 de réception du joint gonflable 17 est obtenue par emboutissage comme représenté et présente en section transversale une forme sensiblement semi-circulaire permettant de retenir le joint 17 à l'état gonflé (figure 3) et de loger pratiquement complètement celui-ci à l'état dégonflé (figure 4). De préférence, on prévoit trois joints gonflables distincts 17 de chaque côté du véhicule, un premier joint avant ayant une partie supérieure logée dans une partie avant du rail supérieur 11 et sa partie restante logée dans le rail intermédiaire 12, un joint gonflable intermédiaire ayant une partie supérieure logée dans la partie du rail supérieur 11 située entre les deux rails intermédiaire 12 et arrière 13 et sa partie restante logée dans le rail arrière 13 et un joint gonflable arrière logé dans la partie arrière du rail supérieur 11.

Les joints gonflables 17 sont reliés chacun, par l'intermédiaire d'une conduite 19, à un ensemble 20 à pompe à air, clapet et réservoir tampon pouvant être commandé de façon à envoyer de l'air sous pression dans les joints gonflables 17 ou refouler l'air sous pression de ceux-ci.

Les rails de guidage 11-13 comprennent également des joints d'étanchéité 21 qui sont chacun en forme de bande fixée à l'ailette de chaque rail de guidage, le long de celle-ci, opposée à celle comportant le joint gonflable 17, dans le cas présent l'ailette supérieure 11b en ce qui concerne le rail de guidage 11. Lorsque les joints gonflables 17 sont à l'état gonflé, ils appliquent les extrémités correspondantes des lamelles 5 contre les joints d'étanchéité 21. Bien entendu, de tels joints d'étanchéité sont également présents sur les côtés latéraux 8a du cadre de lunette arrière 8 pour assurer l'étanchéité lorsque les joints gonflables 17 sont gonflés.

Chaque rail de guidage 11-13 comprend en outre deux pistes parallèles 22 solidaires de l'ailette du rail opposée à celle comportant le joint d'étanchéité 21 et réalisées en un matériau à faible coefficient de friction, tel que du Téflon®, de façon à faciliter le coulissement des extrémités des lamelles 5 et des côtés latéraux 8a du cadre de lunette arrière 8 lorsque les joints gonflables 17 sont à l'état dégonflé où ces extrémités et côtés latéraux tombent par gravité sur les pistes de glissement 22. Ces dernières sont fixées sur l'ailette correspondante du rail de part et d'autre de la rainure dans laquelle est logé le joint gonflable 17.

Il résulte de ce qui précède que les lamelles 5 du toit ouvrant et le cadre de lunette arrière 8 sont fixés dans les rails correspondants lorsque les joints gonflables 17 sont à l'état gonflé pour plaquer les extrémités des lamelles 5 et les côtés latéraux 8a du cadre 8 contre les joints d'étanchéité 21 avec blocage par verrouillage de ces extrémités et côtés latéraux par engagement des plots 14 dans leurs cavités respectives 15, les joints gonflables assurant également à leur état gonflé une étanchéité. Pour déplacer les lamelles 5 et le cadre 8 de façon guidée le long des rails de guidage 11-13, il suffit de commander la pompe à air de l'ensemble 20 dans le sens d'aspiration de l'air sous pression présent dans les joints gonflables 17 qui, à leur état dégonflé, sont logés dans leurs rainures respectives 18 de façon à être protégés des mouvements des lamelles et du cadre de lunette arrière 8. Dans certaines configurations du véhicule, qui seront décrites ci-après, le déplacement des lamelles 5 du toit ouvrant provoque le repliement d'une partie de celles-ci les unes sur les autres de la manière représentée en figure 2 avec les extrémités repliées de ces lamelles situées entre les ailettes des rails de guidage occupant une position sensiblement perpendiculaire à ces ailettes tout en permettant le déplacement de ces extrémités repliées le long des rails de guidage. Une fois les lamelles 5 du toit ouvrant et le cadre 8 amenés à leur position relative choisie de configuration particulière du véhicule, la pompe de l'ensemble 20 est à nouveau commandée, cette fois-ci dans le sens de refoulement de l'air sous pression, pour gonfler les joints 17 qui plaquent les extrémités repliées les unes sur les autres des lamelles 5 et les extrémités non repliées de celles-ci contre les joints d'étanchéité 21 pour assurer l'étanchéité grâce à ces joints et le verrouillage par coopération des plots 14 avec les cavités 15.

La figure 5 représente le toit coulissant à une position configurant le véhicule en une berline. Selon cette configuration, la partie de toit avant 4, le cadre de lunette arrière 8 et la partie de toit arrière 7 sont en prolongement dans cet ordre avec les lamelles 5 de ces deux parties totalement déployées pour ainsi fermer complètement les ouvertures 2 et 3 du véhicule.

La figure 6 représente le véhicule en configuration de cabriolet selon laquelle la partie de toit avant 4, le cadre de lunette arrière 8 et la partie de toit arrière 7 sont dans les rails supérieurs 11 en alignement dans cet ordre, mais avec les lamelles de ces deux parties de toit complètement repliées les unes sur les autres pour découvrir pratiquement toute l'ouverture 2 au-dessus des sièges avant et arrière du véhicule et en partie le hayon arrière du véhicule, qui est ainsi entrouvert pour permettre le transport d'objets relativement longs dans le coffre du véhicule et dépassant de l'arrière de celui-ci.

La figure 7 représente une configuration du véhicule selon laquelle le hayon arrière est ouvert. A cette configuration, les lamelles de la partie de toit avant 4 sont repliées les unes sur les autres à une position fermant l'ouverture 2 au-dessus des sièges arrière mais laissant découvert la partie de celle-ci située au-dessus des sièges avant. Les lamelles de la partie de toit arrière 7 sont passées, en position déployée, sous le cadre de lunette arrière 8 jusqu'à une position permettant l'ouverture du hayon arrière, les parties de toit avant et arrière 4, 7 et le cadre 8 se trouvant toujours dans les rails de guidage supérieurs 11. Cette configuration est possible pour le véhicule en cabriolet ou en berline.

La figure 8 représente le véhicule en une configuration du genre pick-up à quatre places. Selon cette configuration, une partie des lamelles de la partie de toit avant 4 se trouvent dans une partie des rails supérieurs 11 de façon à découvrir l'ouverture 2 au-dessus des sièges avant et fermer cette ouverture au-dessus des sièges arrière, et les lamelles restantes de la partie avant 4 ainsi que la partie de toit arrière 7 et le cadre 8 se trouvent dans les rails de guidage arrière 13 avec une partie des lamelles de la partie 7 repliées les unes au-dessus des autres à l'extrémité inférieure des rails 13. Ainsi, le cadre de lunette arrière 8 est situé en arrière des sièges arrière du véhicule et à une position permettant au conducteur une visibilité habituelle en arrière du véhicule.

Bien que cela ne soit pas représenté aux figures, le véhicule peut également ête configuré en un genre de pick-up à deux places. Selon cette configuration, une partie des lamelles de la partie de toit avant 4 ferme l'ouverture 2 au-dessus des sièges avant du véhicule tandis que la partie restante de ces lamelles ainsi que le cadre de lunette arrière 8 et la partie de toit arrière 7 sont logés dans cet ordre dans les rails de guidage 12 avec la majeure partie des lamelles de la partie de toit arrière 7 repliées les unes au-dessus des autres à l'extrémité inférieure de chaque rail 12

Le dispositif formant toit coulissant de l'invention tel que décrit ci-dessus permet de moduler le véhicule suivant plusieurs types de configurations choisis sans avoir à interchanger des parties importantes de la carrosserie du véhicule. L'utilisation de joints gonflables permet d'assurer une étanchéité parfaite entre le toit modulaire et la carrosserie du véhicule quelles que soient les configurations adoptées de celui-ci. Ces joints gonflables permettent également de plaquer et de verrouiller les lamelles du toit coulissant ainsi que la lunette arrière sur les rails de guidage, de façon à éliminer tous les risques de battement, de bruit et de vibration de ces éléments. Enfin, le dispositif de l'invention est relativement simple et peu coûteux puisqu'il suffit d'adjoindre à la carrosserie du véhicule de simples rails de guidage et les lamelles du toit coulissant sont réalisées en une matière plastique.

## Revendications

1. Dispositif formant toit coulissant de véhicule automobile, le toit coulissant (4, 7) étant guidé bilatéralement au cours de son déplacement dans deux rails (11 ; 12 ; 13), **caractérisé en ce qu'**il comprend des moyens logés dans les deux rails de guidage et agissant sur les bords latéraux du toit pour les maintenir fixement dans les rails à une position choisie du toit ouvrant.

2. Dispositif selon la revendication 1, **caractérisé en ce qu'**il comprend des moyens (21) assurant l'étanchéité des bords latéraux du toit lorsque ces derniers sont fixés par les moyens de maintien (14, 15, 17) dans les deux rails de guidage.

3. Dispositif selon la revendication 2, **caractérisé en ce que** les moyens de maintien et d'étanchéité précités sont intégrés dans les deux rails de guidage.

4. Dispositif selon l'une des revendications précédentes, **caractérisé en ce que** les moyens de maintien comprennent des éléments mâles (14) et femelles (15) des rails de guidage et des bords latéraux du toit, pouvant pénétrer les uns dans les autres pour verrouiller le toit aux rails de guidage et des moyens commandés (17) d'application des bords latéraux du toit sur les rails de guidage de façon que les éléments mâles (14) pénétrent dans les éléments femelles (15).

5. Dispositif selon la revendication 4, **caractérisé en ce que** les moyens d'application (17) sont également agencés pour appliquer les bords latéraux du toit sur les moyens d'étanchéité (21).

6. Dispositif selon l'une des revendications 2 à 5, **caractérisé en ce que** chaque rail de guidage est constitué par un profilé à section transversale en forme de U.

7. Dispositif selon les revendications 4 et 6, **caractérisé en ce que** les moyens d'application précités comprennent, pour chaque rail de guidage, un joint gonflable (17) en forme de tube logé dans une rainure (18) réalisée dans l'une des ailettes du U du rail de guidage à l'opposé du moyen d'étanchéité associé (21) qui est fixé à l'ailette opposée du U du rail, le joint gonflable (17) pouvant occuper un état inactif dégonflé dans lequel il est logé pratiquement complètement dans la rainure (18) ou un état actif gonflé en faisant saillie de la rainure (18) pour appliquer le bord correspondant du toit ouvrant sur le moyen d'étanchéité (21).

8. Dispositif selon la revendication 6 ou 7, **caractérisé en ce que** chaque moyen d'étanchéité précité est un joint d'étanchéité (21) s'étendant le long de l'ailette du U du rail de guidage à laquelle il est fixé.

9. Dispositif selon l'une des revendications précédentes, **caractérisé en ce qu'**il comprend des moyens (22) permettant de faciliter le coulissement des bords latéraux du toit ouvrant dans les rails de guidage (11-13).

10. Dispositif selon la revendication 9, lorsque considérée en combinaison avec la revendication 7, **caractérisé en ce que** les moyens précités facilitant le coulissement du toit comprennent, pour chaque rail de guidage, deux pistes (22) en matériau à faible coefficient de friction, tel que du Téflon®, fixées à l'ailette de support du joint gonflable (17) de part et d'autre de la rainure (18) de logement de celui-ci.

11. Dispositif selon l'une des revendications précédentes, **caractérisé en ce que** le toit coulissant comprend des lamelles rigides transversales (5) articulées les unes aux autres et dont les extrémités logées dans les rails de guidage constituent les bords latéraux précités du toit coulissant.

12. Dispositif selon la revendication 11, lorsque considérée en combinaison avec les revendications 4 et 7, **caractérisé en ce que** les éléments mâles de chaque rail de guidage sont constitués par des plots (14) fixés à l'ailette du U de ce rail opposée à celle comportant le joint gonflable (17) et les éléments femelles des bords latéraux du toit sont constitués par des cavités (15) réalisées dans les extrémités correspondantes des lamelles articulées (5), à l'opposé du joint gonflable (17).

13. Dispositif selon la revendication 11 ou 12, **caractérisé en ce que** chaque articulation (6) de deux lamelles rigides adjacentes (5) est formée par une charnière transversale à film double permettant aux lamelles de se replier les unes sur les autres lors du coulissement du toit.

14. Dispositif selon la revendication 13, **caractérisé en ce que** la hauteur de repliement les unes sur les autres des lamelles rigides (5) est au plus égale à l'espace disponible en hauteur entre les ailettes de chaque rail de guidage.

15. Véhicule automobile, **caractérisé en ce qu'**il est équipé d'un dispositif formant toit coulissant tel que défini dans l'une quelconque des revendications 1 à 14.

16. Véhicule automobile selon la revendication 15, **caractérisé en ce que** les rails de guidage comprennent, solidaires de la caisse du véhicule et de chaque côté de celui-ci, un rail supérieur (11) s'étendant de l'avant du véhicule à partir du pare-brise à l'arrière du véhicule en épousant sensiblement la forme de celui-ci et se terminant approximativement au niveau du fond du coffre arrière et deux rails de dérivation respectivement intermédiaire (12) et arrière (13) raccordés au rail supérieur (11), le rail intermédiaire (12) s'étendant suivant le montant intermédiaire du véhicule situé entre les deux portes avant et arrière et le rail arrière (13) s'étendant à proximité du bord arrière de l'ouverture de la porte arrière en ayant sensiblement la même forme que celui-ci.

17. Véhicule selon la revendication 16, **caractérisé en ce que** le toit coulissant comprend deux parties coulissantes séparées à lamelles articulées respectivement avant (4) et arrière (7) et **en ce qu'**un cadre (8) de support de la lunette arrière (9) du véhicule est monté coulissant par ses côtés latéraux (8a) dans les rails de guidage et peut être fixé dans ceux-ci par les moyens d'application (17) précités, les deux parties coulissantes (4, 7) et le cadre de lunette arrière (8) pouvant être amenés à des positions fixes relatives correspondant à plusieurs configurations différentes définissant un type particulier de véhicule, tel qu'une berline où la partie de toit avant (4), le cadre de lunette arrière (8) et la partie de toit arrière (7) sont en prolongement dans cet ordre le long des rails supérieurs (11) avec les lamelles (5) de ces deux parties (4, 7) occupant une position de fermeture totale du pavillon du véhicule ; un cabriolet où la partie de toit avant (4), le cadre de lunette arrière (8) et la partie de toit arrière (7) sont en prolongement dans cet ordre le long des rails supérieurs (11) avec les lamelles (5) de ces deux parties (4, 7) en position repliée les unes sur les autres de façon à découvrir la partie du pavillon du véhicule située au-dessus des sièges avant et arrière et entrouvrir au moins en partie le hayon arrière du véhicule ; un genre de pick-up à quatre places où la partie de toit avant est en partie située dans les rails supérieurs (11) en ayant certaines de ses lamelles repliées les unes sur les autres pour fermer au moins la partie du pavillon située au-dessus des sièges arrière et la partie restante des lamelles de la partie de toit avant (4) ainsi que le cadre de lunette arrière (8) et la partie de toit arrière (7) sont situés dans les deux rails arrière (13) dans cet ordre ; ou un genre de pick-up à deux places où des lamelles repliées (5) de la partie de toit avant sont situées dans les rails supérieurs (11) pour fermer la partie du pavillon située au-dessus des sièges avant et les lamelles restantes (5) de la partie de toit avant (4) ainsi que le cadre de lunette arrière (8) et la partie de toit arrière (7) sont situées dans les rails intermédiaires (12) dans cet ordre.

18. Véhicule selon la revendication 17, **caractérisé en ce que** dans la configuration du véhicule en berline ou en cabriolet, les lamelles (5) de la partie de toit arrière (7) peuvent coulisser dans les rails supérieurs (11) pour passer en dessous du cadre de lunette arrière (8) afin de permettre l'ouverture du hayon arrière.

## Patentansprüche

1. Schiebedachvorrichtung für Kraftfahrzeuge, wobei das Schiebedach (4, 7) im Laufe seiner Verlagerung beiderseits in zwei Schienen (11; 12; 13) geführt wird, **dadurch gekennzeichnet, dass** sie Mittel enthält, die in den beiden Führungsschienen aufgenommen sind und auf die Seitenränder des Dachs einwirken, um sie in einer ausgewählten Stellung des Schiebedachs fest in den Schienen zu halten.

2. Vorrichtung nach Anspruch 1, **dadurch gekennzeichnet, dass** sie Mittel (21) enthält, welche die Dichtheit der Seitenränder des Dachs gewährleisten, wenn letztere über die Haltemittel (14, 15, 17) in den beiden Führungsschienen fixiert sind.

3. Vorrichtung nach Anspruch 2, **dadurch gekennzeichnet, dass** die vorgenannten Halte- und Dichtmittel in den beiden Führungsschienen integriert sind.

4. Vorrichtung nach einem der vorangehenden Ansprüche, **dadurch gekennzeichnet, dass** die Haltemittel Einsteckteile (14) und Aufnahmeteile (15) der Führungsschienen und der Seitenränder des Dachs enthalten, die ineinander dringen können, um das Dach mit den Führungsschienen zu verriegeln, sowie betätigte Mittel (17) zum Andrücken der Seitenränder des Dachs an die Führungsschienen, derart, dass die Einsteckteile (14) in die Aufnahmeteile (15) eindringen.

5. Vorrichtung nach Anspruch 4, **dadurch gekennzeichnet, dass** die Andrückmittel (17) auch dazu vorgesehen sind, die Seitenränder des Dachs an die Dichtmittel (21) anzudrücken.

6. Vorrichtung nach einem der Ansprüche 2 bis 5, **dadurch gekennzeichnet, dass** jede Führungsschiene aus einem im Querschnitt U-förmigen Profil besteht.

7. Vorrichtung nach Anspruch 4 und 6, **dadurch gekennzeichnet, dass** die vorgenannten Andrückmittel für jede Führungsschiene eine aufblasbare Dichtung (17) in Form eines Schlauchs enthalten, die in einer Rille (18) aufgenommen ist, welche in dem einen Schenkel der U-Form der Führungsschiene dem zugeordneten Dichtmittel (21) gegenüberliegend ausgeführt ist, das am entgegengesetzten Schenkel der U-Form der Schiene befestigt ist, wobei die aufblasbare Dichtung (17) einen abgelassenen, inaktiven Zustand einnehmen kann, in welchem sie praktisch vollständig in der Rille (18) aufgenommen ist, oder einen aufgeblasenen, aktiven Zustand, indem sie aus der Rille (18) vorsteht, um den entsprechenden Rand des Schiebedachs an das Dichtmittel (21) anzudrücken.

8. Vorrichtung nach Anspruch 6 oder 7, **dadurch gekennzeichnet, dass** jedes vorgenannte Dichtmittel eine Dichtung (21) ist, die sich entlang des Schenkels der U-Form der Führungsschiene erstreckt, an dem sie befestigt ist.

9. Vorrichtung nach einem der vorangehenden Ansprüche, **dadurch gekennzeichnet, dass** sie Mittel (22) enthält, mit denen es möglich ist, das Gleiten der Seitenränder des Schiebedachs in den Führungsschienen (11-13) zu erleichtern.

10. Vorrichtung nach Anspruch 9 bei Anbetracht in Kombination mit Anspruch 7, **dadurch gekennzeichnet, dass** die das Gleiten des Dachs erleichternden Mittel für jede Führungsschiene zwei Bahnen (22) aus einem Material mit geringem Reibbeiwert, wie etwa Teflon ®, enthalten, die am Schenkel zum Tragen der aufblasbaren Dichtung (17) beiderseits der Rille (18) zum Aufnehmen derselben befestigt sind.

11. Vorrichtung nach einem der vorangehenden Ansprüche, **dadurch gekennzeichnet, dass** das Schiebedach starre Querlamellen (5) enthält, die aneinander angelenkt sind und deren in den Führungsschienen aufgenommenen Enden die vorgenannten Seitenränder des Schiebedachs bilden.

12. Vorrichtung nach Anspruch 11 bei Anbetracht in Kombination mit Anspruch 4 und 7, **dadurch gekennzeichnet, dass** die Einsteckteile einer jeden Führungsschiene aus Zapfen (14) bestehen, die am Schenkel der U-Form dieser Schiene befestigt sind, welcher dem Schenkel mit der aufblasbaren Dichtung (17) entgegengesetzt ist, und dass die Aufnahmeteile der Seitenränder des Dachs aus Hohlräumen (15) bestehen, welche in den entsprechenden Enden der Gelenklamellen (5), der aufblasbaren Dichtung (17) gegenüberliegend ausgeführt sind.

13. Vorrichtung nach Anspruch 11 oder 12, **dadurch gekennzeichnet, dass** jede Anlenkung (6) zweier aneinandergrenzender, starrer Lamellen (5) aus einem querverlaufenden Doppelfilmscharnier gebildet ist, das es den Lamellen ermöglicht, sich bei der Gleitbewegung des Dachs zusammenzufalten.

14. Vorrichtung nach Anspruch 13, **dadurch gekennzeichnet, dass** die Falthöhe der zusammengefalteten starren Lamellen (5) höchstens gleich dem in der Höhe zwischen den Schenkeln einer jeden Führungsschiene verfügbaren Raum ist.

15. Kraftfahrzeug, **dadurch gekennzeichnet, dass** es mit einer Schiebedachvorrichtung ausgestattet ist, wie sie in einem der Ansprüche 1 bis 14 definiert ist.

16. Kraftfahrzeug nach Anspruch 15, **dadurch gekennzeichnet, dass** die Führungsschienen fest mit dem Aufbau des Fahrzeugs verbunden sind und auf jeder Seite desselben eine obere Schiene (11) enthalten, die sich von der Fahrzeugvorderseite, ausgehend von der Windschutzscheibe, zum Fahrzeugheck erstreckt, wobei sie sich im wesentlichen an dessen Form anschmiegt und annähernd im Bereich des Bodens des hinteren Kofferraums endet, sowie zwei Abzweigschienen, nämlich eine Zwischenschiene (12) und eine hintere Schiene (13), die mit der oberen Schiene (11) verbunden sind, wobei die Zwischenschiene (12) sich entlang der Zwischensäule des Fahrzeugs erstreckt, die sich zwischen der vorderen und der hinteren der beiden Türen befindet, und wobei sich die hintere Schiene (13) in der Nähe des hinteren Randes der Öffnung der Hintertür erstreckt, indem sie im wesentlichen die gleiche Form wie dieser hat.

17. Fahrzeug nach Anspruch 16, **dadurch gekennzeichnet, dass** das Schiebedach zwei getrennte Schiebebereiche mit Gelenklamellen enthält, nämlich einen vorderen (4) und einen hinteren (7), und dass ein Rahmen (8) zum Tragen der Heckscheibe (9) des Fahrzeugs mit seinen Seitenflächen (8a) in den Führungsschienen gleitbeweglich gelagert ist und in diesen über die vorgenannten Andrückmittel (17) fixiert werden kann, wobei die beiden Gleitbereiche (4, 7) und der Heckscheibenrahmen (8) in feste Relativstellungen gebracht werden können, die mehreren, unterschiedlichen Gestaltungen entsprechen, welche einen bestimmten Fahrzeugtyp definieren, wie etwa eine Limousine, wo der vordere Dachbereich (4), der Heckscheibenrahmen (8) und der hintere Dachbereich (7) sich in dieser Reihenfolge entlang der oberen Schienen (11) fortsetzen, wobei die Lamellen (5) dieser beiden Bereiche (4, 7) eine Schließstellung zum vollständigen Verschließen des Fahrzeugdachs einnehmen, oder ein Kabriolett, wo der vordere Dachbereich (4), der Heckscheibenrahmen (8) und der hintere Dachbereich (7) sich in dieser Reihenfolge entlang der oberen Schienen (11) fortsetzen, wobei die Lamellen (5) dieser beiden Bereiche (4, 7) eine Zusammenfaltstellung zum Freigeben des über den Vorder- und Rücksitzen liegenden Fahrzeugdachbereichs und zumindest teilweisem Öffnen der Heckklappe des Fahrzeugs einnehmen, oder eine Art Pick-up als Viersitzer, wo der vordere Dachbereich teilweise in den oberen Schienen (11) liegt, wobei bestimmte seiner Lamellen zusammengefaltet sind, um zumindest den über den Rücksitzen liegenden Dachbereich zu verschließen, und wobei die restlichen Lamellen des vorderen Dachbereichs (4) sowie der Heckscheibenrahmen (8) und der hintere Dachbereich (7) sich in dieser Reihenfolge in den beiden hinteren Schienen (13) befinden, oder aber auch eine Art Pick-up als Zweisitzer, wo zusammengefaltete Lamellen (5) des vorderen Dachbereichs in den oberen Schienen (11) liegen, um den über den Vordersitzen liegenden Dachbereich zu verschließen, und wobei die restlichen Lamellen (5) des vorderen Dachbereichs (4) sowie der Heckscheibenrahmen (8) und der hintere Dachbereich (7) sich in dieser Reihenfolge in den Zwischenschienen (12) befinden.

18. Fahrzeug nach Anspruch 17, **dadurch gekennzeichnet, dass** bei der Gestaltung des Fahrzeugs als Limousine oder als Kabriolett die Lamellen (5) des hinteren Dachbereichs (7) in den oberen Schienen (11) gleiten können, um unter den Heckscheibenrahmen (8) zu gelangen, um das Öffnen der Heckklappe zu gestatten.

## Claims

1. Sliding roof device for a motor vehicle, the sliding roof (4, 7) being guided bilaterally during its movement in two rails (11; 12; 13), **characterised by** the fact that it includes means, which are housed in the two guide rails and act on the side edges of the roof to keep them firmly in the rails at a selected position of the opening roof.

2. Device according to claim 1, **characterised by** the fact that it includes means (21) ensuring the sealing of the side edges of the roof when they are fixed by the means for holding (14, 15, 17) in the two guide rails.

3. Device according to claim 2, **characterised by** the fact that the means for holding and sealing indicated above are incorporated in the two guide rails.

4. Device according to one of the above claims, **characterised by** the fact that the means for holding include male elements (14) and female elements (15) of the guide rails and side edges of the roof, which can be inserted into each other to lock the roof on the guide rails and controlled means (17) for applying the side edges of the roof onto the guide rails so that the male elements (14) are inserted into the female elements (15).

5. Device according claim 4, **characterised by** the fact that the means for applying (17) are also fitted to apply the side edges of the roof to the means for sealing (21).

6. Device according to one of claims 2 to 5, **characterised by** the fact that each guide rail is made by a section with a U-shaped cross section.

7. Device according to claims 4 to 6, **characterised by** the fact that for each guide rail, the means for applying indicated above include an inflatable seal (17) in the form of a tube, housed in a groove (18) made in one of the blades of the U of the guide rail opposite the associated means for sealing (21), which is fixed to the opposite blade of the U of the rail, the inflatable seal (17) being able to take up a deflated inactive state, in which it is housed almost completely in the groove (18) or an inflated active state projecting from the groove (18) to apply the relevant edge of the opening roof onto the means for sealing (21).

8. Device according to claim 6 or 7, **characterised by** the fact that each means for sealing indicated above is a seal (21) extending along the blade of the U of the guide rail to which it is fixed.

9. Device according to one of the above claims, **characterised by** the fact that it includes means (22) allowing the side edges of the opening roof to slide easily in the guide rails (11 - 13).

10. Device according to claim 9, when considered together with claim 7, **characterised by** the fact that for each guide rail the means allowing the roof to slide indicated above include two tracks (22) in material with a low friction coefficient, such as Teflon ®, fixed to the support blade of the inflatable seal (17) on either side of the groove (18) housing it.

11. Device according to one of the above claims, **characterised by** the fact that the sliding roof includes rigid transverse jointed strips (5), the ends of which are housed in the guide rails forming the side edges of the sliding roof indicated above.

12. Device according to claim 11, when considered together with claims 4 and 7, **characterised by** the fact that the male elements of each guide rail are made by contacts (14) fixed to the blade of the U of this rail opposite that including the inflatable seal (17) and the female elements of the side edges of the roof are constituted by cavities (15) made in the relevant ends of the jointed strips (5) opposite the inflatable seal (17).

13. Device according to claim 11 or 12, **characterised by** the fact that each joint (6) of two adjacent rigid strips (5) is made by a double film transverse hinge allowing the strips to fold one on top of the other when the roof slides.

14. Device according to claim 13, **characterised by** the fact that the folding height of the rigid strips (5) one on top of the other is at most equal to the space available in height between the blades of each guide rail.

15. Motor vehicle, **characterised by** the fact that it is fitted with a sliding roof device such as defined in any of claims 1 to 14.

16. Motor vehicle according to claim 15, **characterised by** the fact that, integral with the body of the vehicle and on each side of it, the guide rails include a top rail (11) extending from the front of the vehicle from the windscreen to the rear of the vehicle, being more or less moulded to its shape and ending approximately at the bottom of the boot, and two middle (12) and rear (13) branch rails connected to the top rail (11), the middle rail (12) extending in line with the middle upright of the vehicle situated between the two front and rear doors and the rear rail (13) extending close to the rear edge of the opening rear door and having more or less the same shape as it.

17. Vehicle according to claim 16, **characterised by** the fact that the sliding roof includes two sliding parts, front (4) and rear (7) respectively, which are separated by jointed strips, and that a frame (8) to support the rear window (9) of the vehicle is fitted, which slides in the guide rails via its side edges (8a) and may be fixed in them by the means for applying (17) indicated above, the two sliding parts (4, 7) and the frame of the rear window (8) being able to be put in fixed positions each corresponding to several different configurations defining a particular type of vehicle, such as a saloon, where the front part of the roof (4), the frame of the rear window (8) and the rear part of the roof (7) extend in this order along the top rails (11) with the strips (5) of these two parts (4, 7) taking up a position completely closing the roof of the vehicle; a convertible, where the front part of the roof (4), the frame of the rear window (8) and the rear part of the roof (7) extends in this order along the top rails (11), with the strips (5) of these two parts (4, 7) in the folded position one on top of the other so as to uncover the part of the roof of the vehicle situated above the front and rear seats and to half open at least part of the rear door of the vehicle; a type of pickup with four seats, where the front part of the roof is partly situated in the top rails (11) with some of its strips folded one on top of the other to close at least the part of the roof situated above the rear seats and the remaining part of the strips of the front part of the roof (4) as well as the frame of the rear window (8) and the rear part of the roof (7) are situated in the two rear rails (13) in this order; or a type of pick up with two seats, where some of the folded strips (5) of the front part of the roof are situated in the top rails (11) to close to the part of the roof situated above the front seats and the remaining strips (5) of the front part of the roof (4) as well as the frame of the rear window (8) and the rear part of the roof (7) are situated in the middle rails (12) in this order.

18. Vehicle according to claim 17, **characterised by** the fact that in the configuration of the vehicle as a saloon or convertible the strips (5) of the rear part of the roof (7) can slide in the top rails (11) to pass below the frame of the rear window (8) in order to allow the rear door to open.
